# EUROPEAN PATENT APPLICATION

(11) **EP 4 349 468 A1**
(43) Date of publication of application: **10.04.2024**
(21) Application number: 23461656.3
(22) Date of filing: 03.10.2023
(51) Int. Cl.: B01F 23/231, B01F 23/237, B01F 23/20, B01F 23/70, B01F 101/14

(54) **SYSTEM FOR THE SATURATION OF WATER WITH HYDROGEN**

(30) Priority: 04.10.2022 PL 44243722
(71) Applicant: PLASMA INVESTMENT SP. z o.o., 50-082 Wroclaw (PL)
(72) Inventor: Binkiewicz, Grzegorz, 49-318 Skarbimierz (PL); Reszke, Edward, 54-530 Wroclaw (PL); Schroeder, Grzegorz, 62-025 Kostrzyn (PL); Yelkin, Ihar, 50-082 Wroclaw (PL)
(74) Representative: Czarnik, Maciej

(57) **Abstract**

The present invention relates to a system for the saturation of water with hydrogen, designed to produce water that can be used as an antioxidant in medical applications.

System for the saturation of water with hydrogen, provided with water source (UW) and hydrogen saturation unit (ZN) characterized in that water source (UW) is connected with hydrogen saturation unit (ZN) using water pipes via noise-type micro-clustering device (MS), wherein noise-type micro-clustering device (MS) has reservoir (ZM) that is connected with water source (UW) via linear water flow valve (ZL), the upper part of reservoir (ZM) is connected with noise-type reactor (RS) that is connected with the lower part of reservoir (ZM) via water pump (PM), wherein noise reactor (RS) contains at least two glass noise diodes (D1, D2), reservoir (ZM) is also provided with water level sensor (CP1) and ventilation exhaust (VT1) and reservoir (ZM) is connected with at least one hydrogen saturation container (KN) via at least one metering pump (PD1), wherein hydrogen saturation container (KN) is provided with diffuser (OF₁), connected with hydrogen source (H₂) via three-way hydrogen valve (ZT), pressure controller (RD) and main gas valve (ZG), wherein each hydrogen saturation container (KN) is connected with ventilation exhaust (VT₃, VT₄, VTₙ₊₂) via check valve (BP₁, BP₂, BPₙ₊₁).

## Description

The invention relates to a system for the saturation of water with hydrogen that can be used in the medical, cosmetic industries, in food production, as well as to improve the efficiency of methanol synthesis reactions.

A flow-through plasma reactor that enables the modification of the properties of water/aqueous solutions through resonant stochastic amplification of the resonance of selected chemical compounds in water with the generation of electromagnetic noise during plasma discharge, is known from the following publications: Yelkin I. et al.: The Industrial Production of Water Dedicated to Absorption of Gases, J.Water Resour. Protect. August 2021 Vol.13 No.8. A flow-through plasma reactor enables the modification of the properties of water/aqueous solutions through resonant stochastic amplification of the resonance of selected chemical compounds in water, with the generation of electromagnetic noise during plasma discharge. For the sake of comparison, this document demonstrates the main parameters of the quality of super-pure water, tap water and water drawn from a water source in Besko (Poland) before and after processing in a plasma reactor. Additionally, the 170 NMR (full width at half maximum) and electrospray ionisation mass spectrometry (ESI MS) methods were used to determine the differences between the physicochemical parameters of untreated and plasma-treated water. Plasma-treated water was found to exhibit entirely different gas absorption properties than untreated water samples as a function of temperature and pressure; the cited paper presented illustrative data for CO2, oxygen and acetylene. The improved gas absorption properties of plasma-treated water make it very suitable for use in industrial processes. Of note is the high output of the new reactor (4,000 I/h) and low energy consumption (20 MJ/h) needed for the treatment of the above volumetric flow rate of water. This paper describes a plant that can produce 50m3 of micro-structured water per day with very low energy consumption.

A method and device for the micro-structuring of liquids, including body fluids, are known from Polish patent description PL238174, which discloses a method and device for the micro-structuring of liquids, including body fluids. The method comprises in the close exposure of the treated liquid to a broadband noise-generating electric and/or magnetic field that is generated by a connected broadband electric and/or magnetic noise source of the frequencies in the range of 100 Hz to 50 MHz, in the form of densely packed striations with noise-resembling characteristics. The device is provided with a broadband electric and/or magnetic noise source, connected to a power supply equipped with a power signal amplitude and frequency modulator.

A method and device for the production of antioxidant potable water enriched with active hydrogen is known from Polish patent application No. P.406260. According to this method, water taken from the source is ground by a water nozzle, cooled in a tank and purified through the elimination of non-standard substances, demineralised to achieve a uniform structure and chemical composition and cooled to preferably 2 - 3°C, and then transferred to a saturation buffer tank using a pump and a saturation nozzle, wherein hydrogen is simultaneously fed into the tank via a valve and subsequently hydrogen-enriched water is fed to the saturation tank via a mixing device and a dosing pump.

A hydrogen-containing composition is known from US patent description US10953041 B2. The method of producing a hydrogen-containing composition comprises the steps of: pumping the carrier liquid into at least one process vessel; degassing the carrier liquid using a vacuum pump; agitating the carrier liquid; reducing the temperature of the carrier liquid to the range of 0°C to 20°C; pumping the cooled, agitated, degassed carrier liquid into the hydrogen reactor vessel which contains gaseous hydrogen, wherein the process of pumping the cooled, agitated, degassed carrier liquid into the hydrogen reactor vessel containing gaseous hydrogen pressurizes the hydrogen reactor vessel by compressing the gaseous hydrogen in the upper space of the hydrogen reactor vessel; the extraction of compressed gaseous hydrogen from the upper space of the hydrogen reactor vessel into an ejector tube; and the pumping the carrier liquid through the ejector tube in the pressurised hydrogen reactor vessel, wherein the ejector tube comprises of a series of filters that mix the gaseous hydrogen with the carrier liquid, transferring the compressed gaseous hydrogen into the carrier liquid via bubbles created by the ejector tube, wherein the concentration of gaseous hydrogen in the carrier liquid in the hydrogen reactor vessel is between 3 ppm and 10 ppm. The device comprises of: at least one process vessel for receiving the carrier liquid; a first pump for creating a vacuum in the carrier liquid; a mixer for mixing the carrier liquid; a second pump for feeding the carrier liquid to a chiller, wherein the chiller reduces the temperature of the carrier liquid to between 0°C and 20°C; a third pump for pumping the cooled, agitated, degassed carrier liquid into the hydrogen reactor vessel, wherein the hydrogen reactor vessel contains gaseous hydrogen and the third pump pressurises the hydrogen reactor vessel by compressing gaseous hydrogen in the upper space of the hydrogen reactor vessel; and a fourth pump for extracting the compressed gaseous hydrogen from the upper space of the hydrogen reactor vessel into the ejector tube and for pumping the carrier liquid through the ejector tube located in the pressurised hydrogen reactor vessel, wherein the ejector tube comprises of a series of filters that mix the compressed hydrogen with the carrier liquid by transferring the gaseous hydrogen to the carrier liquid through bubbles formed by the suction tube. The concentration of gaseous hydrogen in the carrier liquid in the hydrogen reactor vessel is between 3 ppm and 10 ppm.

A device for the production of hydrogen-rich water equipped with an ejector, disclosed in Chinese patent application CN209348450, includes a first water container, a second water container, a third water container and a fourth water container, wherein the first water pump is connected with the first water pipe; the first water pump is connected with the second water container via a second water transporting pipe and the second water container is further provided with a third water transporting pipe; the hydrogen generating device is provided with a hydrogen outlet pipe; the ejector comprises of a liquid inlet pipe, a liquid outlet pipe and a gas inlet pipe, the liquid inlet pipe is connected with the third water transporting pipe and the gas inlet pipe is connected with the hydrogen outlet pipe; a self-priming booster pump, whose inlet is connected with the liquid outlet pipe, the outlet is connected with the water outlet, the hydrogen dissolves in the water and the water becomes hydrogen-rich water, the hydrogen enters the ejector and mixes with the water in the ejector, the hydrogen dissolves in the water and the water becomes hydrogen-rich water.

A method of producing hydrogen-rich water using the physical method and a device for its production are disclosed in Chinese patent application CN110482667. The method is carried out in an enclosed environment. Highly pure hydrogen is fed under high pressure into the water through a molecular screen; the production process involves the following steps: filling the enclosed environment with water; adding hydrogen to water through the molecular screen after the de-pressurisation of hydrogen to the desired pressure; and subsequently filling the system with hydrogen-rich water. The device for the production of hydrogen-rich water comprises of a set of high-pressure hydrogen steel cylinders, a bus bar, a hydrogen pressure reduction valve, a hydrogen pipeline, a hydrogen-water reactor and a molecular screen device, the design is simple, the preparation process is simple, the efficiency of preparation is high and the content of hydrogen in hydrogen-rich mineral water can be significantly increased.

Apparatus and method for the automatic production of highly concentrated hydrogen-rich water are disclosed in Chinese patent application No. CN107021556. The apparatus is equipped with a pure water-containing machine connected with a pure water and hydrogen reaction tank provided with a mass sensor at its bottom via a pipeline having a first check valve, wherein the pure water and hydrogen reaction tank is connected with a first pressure gauge, one end of the pure water and hydrogen reaction tank is connected with the hydrogen machine via a pipeline having a second check valve and a first solenoid valve, wherein the hydrogen machine is connected with a hydrogen pressure gauge, wherein the other end of the pure water and hydrogen reaction tank is connected with a hydrogen-rich water tank via a pipeline having a second solenoid valve, the hydrogen-rich water tank is connected with the second pressure gauge and is connected with a water induction switch via a pipeline,wherein a weight sensor, the pure water-containing machine, the hydrogen pressure gauge and the hydrogen machine are connected with a smart board of a controlling computer via conductive cables. Hydrogen and pure water are mixed together using high pressure, wherein the hydrogen content of the hydrogen-rich water product is extremely high, the operational efficiency of the equipment is high, the automated preparation of hydrogen-rich water has been achieved, the technical difficulties of hydrogen-water fusion have been solved, the overall cost of the equipment is low and the equipment and method are easy to obtain and achieve.

The purpose of the invention was to develop a system for the saturation of water with hydrogen that would be able to produce water enriched with gaseous hydrogen having a low Redox potential (ORP).

The Redox potential is an indicator of water quality, its value is expressed in millivolts (mv) and it is measured using an ORP meter. The name of this index is known worldwide and is synonymous with the ability of water to chemically react in a manner that is called oxidation or reduction. Water with a positive ORP potential is a liquid that has oxidising properties. Higher index values indicate higher oxidising properties of a solution that may contain free radicals and may therefore be dangerous to humans. Water that is subject to reduction will have a negative ORP index and will be therefore considered as an antioxidant that does not contain any dangerous radicals. The lower the Redox ORP potential, the higher the probability that the water is healthy and has medicinal properties.

The present invention relates to a system for the saturation of water with hydrogen, provided with a water source and a hydrogen saturation unit and characterized in that the water source is connected with the hydrogen saturation unit using water pipes via a noise-type micro-clustering device, wherein the noise-type micro-clustering device has a reservoir that is connected with the water source via a linear water flow valve, the upper part of the reservoir is connected with a noise reactor that is connected with the lower part of the reservoir via a water pump, wherein the noise reactor contains at least two glass noise diodes, the reservoir is provided with a water level sensor and a ventilation exhaust and the reservoir is connected with at least one hydrogen saturation container via at least one metering pump, wherein the hydrogen saturation container is provided with a diffuser connected with the hydrogen source via a three-way hydrogen valve, a pressure controller and a main gas valve, wherein each hydrogen saturation container is connected with the ventilation exhaust via a check valve.

The container is preferably provided with a water level sensor and a spigot equipped with a hydrated water outlet valve.

The hydrogen saturation container is preferably a bottle.

The glass noise diodes are preferably provided with cavity anodes and flat cold cathodes supplied with a DC pulsating voltage, wherein the vacuum in the glass noise diodes is dynamically maintained using an air infiltration vacuum pump, connected via a vacuum control valve and an air filter with a humid ambient air inlet, while the outlet of the vacuum pump is connected with a second ventilation exhaust.

The water source is preferably equipped with a submersible pump that is connected to a water treatment plant and a mineral composition regulator having a linear valve regulating the water flow to the noise-type micro-clustering device.

The system for the saturation of water with hydrogen using a noise-type micro-clustering device according to the invention enables the performance of hydrogen saturation with lower hydrogen pressure that does not exceed 6 bars. The process of saturation is static when the water is only pressurised by the operating pressure of gas inside a closed saturation chamber, or is dynamic when the flow of a gas stream is ensured through the saturation chamber, with the operating pressure regulated by a check valve. Apart from the significant reduction of hydrogen pressure levels, the advantages of this technology include the reduction of time needed to achieve typical saturation levels of 6-10 ppb without any additional water cooling and degassing before saturation. Given a generally stable temperature of water drawn from the deep water source between 13-15°C, the saturation process takes more than 60 seconds. Another advantage of this method comprises in the long life of the obtained product. When packaged in glass bottles, product life is guaranteed for a full quarter of a year.

The system according to the invention enables the production of water rich in gaseous hydrogen that has a low Redox potential (ORP), i.e. water that is most similar to that already present in the human body. The main advantages of water with a negative Redox ORP potential are: the strengthening of the immunity of the human body, better absorption of vitamins and minerals, improved circulation, improved intestinal function and many other benefits related to all systems and organs.

The present invention resolves the technical problem of achieving long-term saturation of water with hydrogen, for the purpose of obtaining water that is rich in gaseous hydrogen and has a low Redox potential (ORP), that ensures long product life for the duration of up to several months. The problem was resolved by connecting the water source and the hydrogen saturation unit using water pipes, via a noise-type micro-clustering device, to the hydrogen saturation unit, thus achieving the desired extended life of product having a low Redox potential.

A noise-type micro-clustering device is a stochastic micro-clustering device that utilises broadband electromagnetic/acoustic noise generated by vapour-supplemented glow discharge plasma as an energy source. Water that flows through a stochastic noise-type micro-clustering device has no physical contact with the noise-generating process and following this process it does not contain any free radicals. The object of the invention has been described in more detail in the description of the examples of the invention and in the figures, in which:

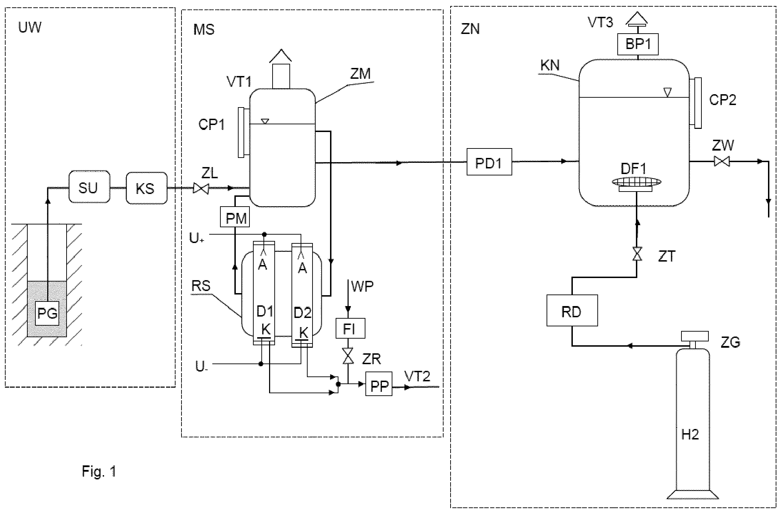

fig. 1 presents a system for the saturation of water with hydrogen provided with a hydrogen saturation chamber,

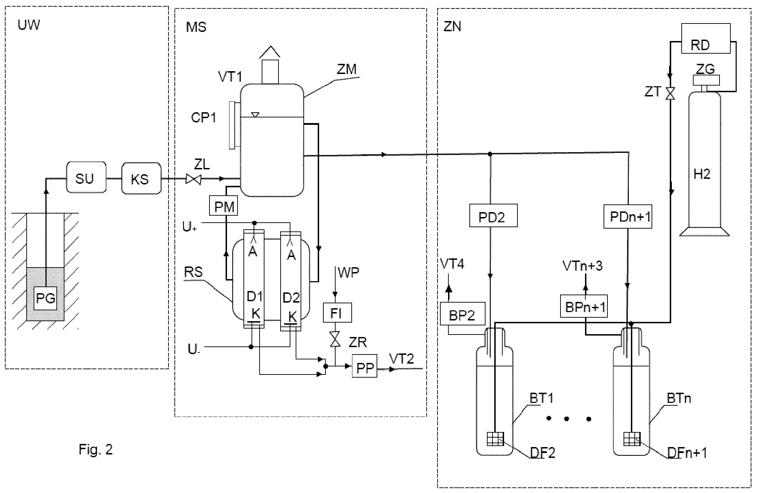

fig. 2 presents a system for the saturation of water with hydrogen provided with bottles,

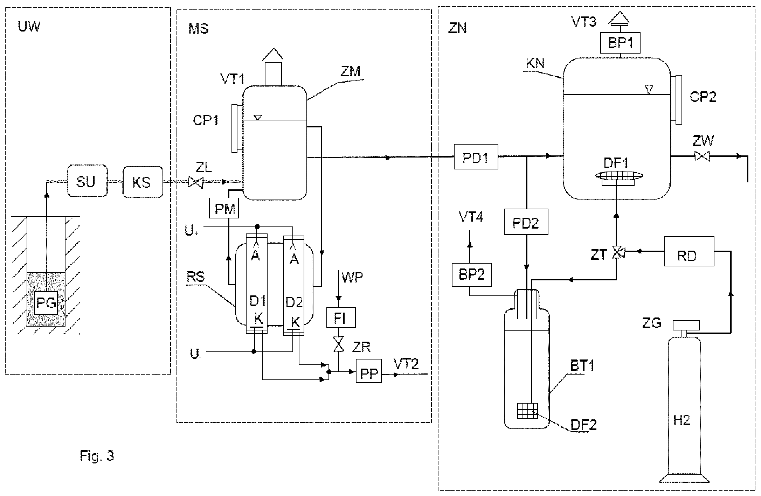

fig. 3 presents a schematic view of a system for the saturation of water with hydrogen provided with a hydrogen saturation chamber and bottles,

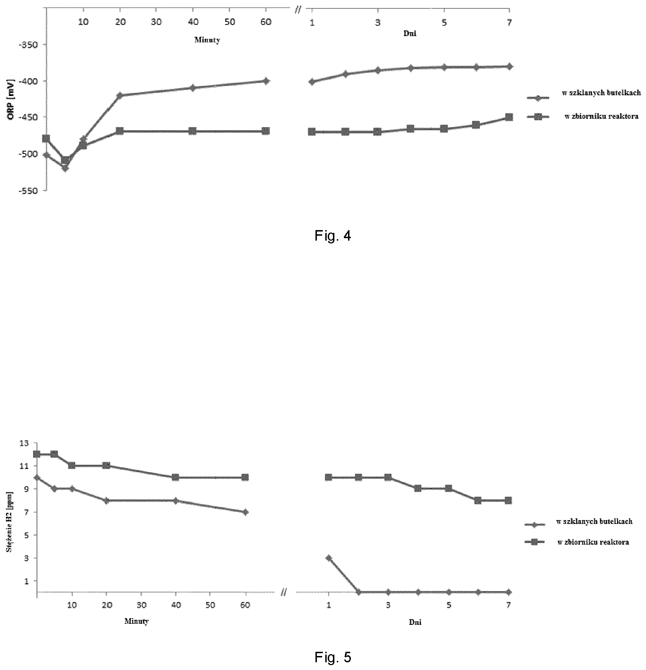

fig. 4 presents a chart of the ORP values for water with pH=8.1 in a reservoir-type reactor and in glass bottles, achieved following its saturation with gaseous hydrogen,
fig. 5 presents a chart of hydrogen concentration in water with pH=8.1 in a reservoir-type reactor and in glass bottles, achieved following its saturation with gaseous hydrogen,

### Example 1

The system for the saturation of water with hydrogen has a water source UW that is connected using water pipes, via a noise-type micro-clustering device MS, to a hydrogen saturation unit ZN. The water SOURCE UW is a deep water intake UW, provided with a submersible pump PG that is connected with a water treatment plant SU, and a mineral composition regulator KS provided with a linear water flow valve ZL of the noise-type micro-clustering device MS. The noise-type micro-clustering device MS has micro-clustering device reservoir ZM that is connected with water source UW via linear water flow valve ZL and, simultaneously, the upper part of the micro-clustering device reservoir ZM is connected with noise-type reactor RS. Noise-type reactor RS is connected with the lower part of micro-clustering device reservoir ZM via micro-clustering device water pump PM. Noise-type reactor RS contains two glass noise diodes D1, D2 provided with cavity anodes A and flat cold cathodes K, which are supplied with pulsating DC voltage U+ , U₋. Glass noise diodes D1, D2 utilise glow discharge plasma in low-pressure humid air, while cold cathode K and cavity anode A are powered with pulsating voltage. The vacuum in glass diodes D1, D2 is dynamically maintained by an air infiltration vacuum pump PP, connected via vacuum control valve ZR and air filter FI with humid ambient air inlet WP, while the outlet of vacuum pump PP is connected with second ventilation exhaust VTz. Micro-clustering device reservoir ZM is provided with first water level sensor CP₁ and first ventilation exhaust VT₁, wherein micro-clustering device reservoir ZM is connected with a hydrogen saturation container which constitutes chamber KN of hydrogen saturation unit ZN via first metering pump PD₁. The lower part of hydrogen saturation chamber KN contains first diffuser DF₁, which is connected with hydrogen cylinder H₂ via hydrogen three-way valve ZT, pressure controller RD and gas main valve ZG. Hydrogen saturation CHAMBER KN is connected with third ventilation exhaust VTsvia first check valve BP₁. Hydrogen saturation chamber KN is also provided with second water level sensor CP₂ and a spigot provided with hydrated water outlet valve ZW.

### Example 2

System for the saturation of water with hydrogen as described in example 1, with the exception that hydrogen saturation container KN has the form of ten bottles BT₁, BT₂, ..., BT₁₀. The lower part of each bottle BT₁, BT₂, ..., BT₁₀ holds second diffuser DF₂ to eleventh diffuser DF₁₁, which are connected with hydrogen cylinder Hz via hydrogen three-way valve ZT, pressure controller RD and gas main valve ZG. Each bottle BT₁, BT₂, ..., BT₁₀ is connected with ventilation exhaust four VT₄ to thirteen VT₁₃ via check valves two BP₂ to eleven BP₁₁, respectively.

### Example 3

System for the saturation of water with hydrogen as described in example 1 and 2, with the exception that hydrogen saturation unit ZN is provided with hydrogen saturation chamber KN and six bottles BT₁, BT₂, ..., BT₆.

Water drawn from the water source, which constitutes deep water intake UW provided with submersible pump PG, is subsequently fed to water treatment plant SU and then to mineral composition regulator KS. Water with potable water properties is then fed to noise-type micro-clustering device MS provided with flow-though noise-type reactor RS connected with the micro-clustering device reservoir via a bypass and provided with its own micro-clustering device water pump PM that generates a volumetric flow rate of water in the bypass at least two times higher than the rate of water pickup at the noise-type micro-clustering device generated by metering pump PD. The stable level of water in the reservoir of noise-type micro-clustering device MS is ensured by linear valve ZL that is controlled by a signal from first water level sensor CP₁. Noise-type reactor RS includes a flow-through vessel provided with noise diodes D1, D2 that are equipped with cavity anodes A and cold flat cathodes K powered using pulsating DC voltage +U - _U. Soft vacuum is maintained inside the glass enclosures of noise diodes D1, D2 in order to generate the effect of glow discharge in the atmosphere of natural or high humidity. The vacuum is dynamically maintained using vacuum pump PP, while air infiltration is provided by vacuum control valve ZR which is serially connected with air filter FI. Micro-clustered water is drawn from noise-type micro-clustering device MS by metering pump PD, which fills hydrogen saturation chamber KN where the saturation of water with hydrogen is effected. Alternatively, water can be saturated in containers that can be cork-sealed, in particular bottles BT₁, BT₂, ..., BTₙ, whereby the flow of gaseous hydrogen can be switched using three-way valve ZT. The hydrogen supply line is provided with a pressure cylinder (bottle) with gas, pressure reduction valve RD and ceramic diffusers DF₁, DF₂, ..., DFₙ situated downstream of three-way valve ZT. The saturation containers, in particular bottles BT₁, BT₂, ..., BTₙ, as well as chamber KN, are equipped with check valves BP₁, BP₂, ... BPₙ₊₁ (BACK PRESSURE), which are intended to withhold hydrogen and control its flow at specified pressure. Excess hydrogen is vented via special explosion-proof ventilation exhausts VT₃, VT₄, ..., BPₙ₊₂. Hydrated water is picked up downstream of output valve ZW, while in the case of its distribution into, for example, bottles BT₁, BT₂, ..., BTₙ, the process is finalised by a corking device (bottle capper).

### Example 4

The system according to the invention was used to obtain hydrogen-rich water with a low oxidation-reduction potential (ORP). Hydrogen-rich water was obtained using plasma technology and through the saturation of water with gaseous hydrogen in a reactor vessel or in glass bottles. A flow-through plasma reactor was developed to facilitate contact-less modification of the structure and properties of water/aqueous solutions using resonant amplification of stochastic resonance of selected chemical compounds and aqueous structures in water and broadband electromagnetic noise at frequencies between 100Hz and 50MHz generated during plasma discharge. This water is subsequently saturated with gaseous hydrogen inside a reactor or in glass bottles. In the reactor, the obtained water demonstrates high hydrogen concentration levels (approximately 8 ppm) and a negative oxidation/reduction potential (ORP) value (approximately -450 mV). The process of the saturation of water with hydrogen using this technology in a 1m³ container takes about 30 minutes at 20°C. In the case of the technology of obtaining water with negative ORP in bottles, the process of saturating water with hydrogen takes only 5-10 seconds. Bottled water obtained using this technology contains no gaseous hydrogen after 24 hours, but maintains a negative ORP value of around -380 mV for up to three months. The production of water that will maintain the demonstrated parameters in the long term is only possible with the combined implementation of manufacturing processes utilising broadband electromagnetic noise at frequencies between 100 Hz and 50 MHz generated during plasma discharge, and the instantaneous addition of gaseous hydrogen to water obtained in this way.

Water obtained using the technology of the system according to the invention was examined in the course of physico-chemical tests, the results of which have been presented in Table 1.

**Table 1. The values of physico-chemical parameters of water before and after treatment**

| | Reference document / standard | Unit | Water picked up from source | Water at the output of the MS module | HRW Method 1 In reservoir | HRW Method 2 In glass bottles |
|---|---|---|---|---|---|---|
| pH | PN-EN ISO 10523:2012 | [pH] | 7.1 ± 0.2 | 7.2 ± 0.2 | 7.8 ± 0.4 | 7.9 ± 0.4 |
| Electrical conductivity | PN-EN-27888:1999 | [µS/cm] | 830 ± 91 | 679 ± 75 | 754 ± 89 | 764 ± 90 |
| Permanganate index | PN-EN ISO 8467:2001 | [mg O₂/dm³] | <0.5 | 1.6± 0.1 | <0.5 | <0.5 |
| Determination of magnesium - EDTA titration method | PN-C-04554-4:1999 | [mg Mg/dm³] | 7±1 | 7±1 | 6±1 | 6±1 |
| Determination of calcium content - EDTA titration method | PN-ISO 6058:1999 | [mg Ca/dm³] | <5.0 | <5.0 | < 5.0 | < 5.0 |
| Determination of iron | PN-EN ISO 17294-2:2016-11 | [mgFe/dm³] | 0.045 ± 0.012 | 0.100 ± 0.012 | 0.100 ± 0.012 | 0.100 ± 0.012 |
| Determination of manganese | PN-EN ISO 17294-2:2016-11 | [mg Mn/dm³] | 0.007 ± 0.001 | 0.0032 ±0.0004 | <0.003 | <0.003 |
| Determination of dissolved oxygen - electrochemical probe method | PN-ISO 5814:2013-04 | [mg O₂/dm³] | 8.8 ± 0.7 | 8.6 ± 0.7 | <0.1 | <0.1 |
| Determination of ammonium | PN-ISO 7150-1:2002 | [mg NH₄ /dm³] | <0.129 | <0.129 | <0.129 | <0.129 |
| Determination of dissolved anions - nitrates | PN-EN ISO 10304-1 :2009, Ac2012 | [mgNOs /dm³] | 7.46 ± 0.97 | 8.62 ± 1.12 | 7.11 ± 0.85 | 7.09 ± 0.67 |
| Determination of dissolved anions - chlorides | PN-EN ISO 10304-1:2009, Ac2012 | [mg Cl/dm3] | 33 ± 3 | 31 ± 3 | 32 ± 3 | 32 ± 3 |
| Determination of dissolved anions - sulphates | PN-EN ISO 10304-1:2009, Ac:2012 | [mg SO₄ /dm³ ] | 32 ± 5 | 43 ± 7 | 42 ± 5 | 43 ± 7 |
| Determination of dissolved anions - Fluorides | PN-EN ISO 10304-1:2009, Ac:2012 | [mg F/dm³ ] | 0.251 ± 0.045 | 0.228 ± 0.041 | 0.231 ± 0.044 | 0.232 ± 0.042 |
| Total dissolved solids (TDS) [ppm] | | | 204±5 | 195±5 | 208±5 | 198±5 |
| Determination of hydrogen concentration, H2Blue method | | ppm | | | 12±1 | 10±1 |
| Oxidation/reduction potential (ORP) [mV] | | | 135±3 | 158±4 | -480±8 | -502±8 |
| Temperature | | | 13°C | 15° C | 20° C | 20° C |

Water processed using the technology of the system according to the invention was subsequently examined after 7 days and the physico-chemical test results are shown below in Table 2.

**Table 2. The change of physico-chemical parameters of water in time, demonstrating the condition of product after 7 days**

| | Reference document | Unit | Water at the output of the MS module | Water from the MS module after 7 days of storage in glass bottles | HRW after 7 days of storage in a container reactor | Water after 7 days of storage in glass bottles |
|---|---|---|---|---|---|---|
| pH | PN-EN ISO 10523:2012 | [pH] | 7.2 ± 0.2 | 7.9 ± 0.4 | 8.1 ± 0.4 | 8.1 ± 0.4 |
| Electrical conductivity | PN-EN-27888:1999 | [µS/cm] | 679 ± 75 | 717 ± 78 | 720 ± 70 | 714 ± 78 |
| Permanganate index | PN-EN ISO 8467:2001 | [mg O₂ /dm³] | 1.6 ± 0.1 | <0.5 | <0.5 | <0.5 |
| Determination of magnesium - EDTA titration method | PN-C-04554-4:1999 | [mg Mg/dm³] | <5.0 | <0.5 | <0.5 | <0.5 |
| Determination of calcium content - EDTA titration method | PN-ISO 6058:1999 | [mg Ca/dm³] | <5.0 | < 5.0 | < 5.0 | < 5.0 |
| Determination of dissolved oxygen - electrochemical probe method | PN-ISO 5814:2013-04 | [mg O₂ /dm³] | 8.6± 0.7 | 5.2± 0.7 | <0.5 | <0.5 |
| Determination of ammonium | PN-ISO 7150-1:2002 | [mg NH₄ /dm³] | <0.129 | 0.46±0.05 | <0.1 | <0.1 |
| Determination of dissolved anions - nitrates | PN-EN ISO 10304-1 :2009, Ac2012 | [mgNO₃ /dm³] | 8.62 ± 1.12 | 2.4 ± 0.4 | 2.1 ± 0.4 | 2.1 ± 0.4 |
| Determination of dissolved anions - chlorides | PN-EN ISO 10304-1:2009, Ac2012 | [mg Cl/dm³] | 31 ± 3 | 32 ± 3 | 35 ± 3 | 36 ± 3 |
| Determination of dissolved anions - sulphates | PN-EN ISO 10304-1:2009, Ac:2012 | [mg SO₄ /dm³] | 43 ± 7 | 55 ± 5 | 54 ± 5 | 54 ± 5 |
| Determination of dissolved anions - Fluorides | PN-EN ISO 10304-1:2009, Ac:2012 | [mg F/dm³] | 0.22 ± 0.04 | 0.26 ± 0.05 | 0.25 ± 0.05 | 0.26 ± 0.05 |
| Determination of iron | PN-EN ISO 17294-2:2016-11 | [mg Fe/dm³] | 0.100± 0.012 | <0.10 | <0.10 | <0.10 |
| Determination of manganese | PN-EN ISO 17294-2:2016-11 | [mg Mn/dm³] | 0.0032± 0.0004 | <0.003 | <0.003 | <0.003 |
| Determination of hydrogen concentration, H2Blue method | | ppm | 0 | 0 | 8 | 0 |
| Oxidation/reduction potential (ORP) [mV] | | | 158±4 | 123±4 | -450±8 | -379±8 |
| Temperature | | | 15° C | 25° C | 25° C | 25° C |

Water obtained with the use of a noise-type micro-clustering device with a hydrogen saturation unit demonstrates a high level of hydrogen concentration (8 ppm) and a negative oxidation/reduction potential (ORP) value (-450 mV). The negative ORP value is stable in time. Water of the described parameters can only be obtained if it is processed using a noise-type micro-clustering device.

### List of designations used in the figures

A - cavity anode,
BP₁ - first check valve,
BP₂ - second check valve,
BT - bottle,
CP1 - first water level sensor,
CP2 - second water level sensor,
DF - diffuser,
D1 ,D2 - glass noise diode,
FI - air filter,
H² - hydrogen cylinder,
K - flat cold cathode,
KN - hydrogen saturation chamber,
KS- mineral composition regulator,
MS - noise-type micro-clustering device,
PD - metering pump,
PG - submersible pump,
PM - micro-clustering device water pump,
PP - vacuum pump,
RD - controller - pressure controller,
RS - noise-type reactor,
SU - water treatment plant,
UW - water source,
VT1 - VTₙ - ventilation exhaust,
WP - humid ambient air inlet,
ZM - micro-clustering device reservoir,
ZN - hydrogen saturation unit,
ZG - main gas valve,
ZL - linear water flow valve,
ZR - vacuum control valve,
ZW - hydrated water outlet valve
ZT - three-way hydrogen valve.

## Claims

1. A system for the saturation of water with hydrogen, provided with water source (UW) and hydrogen saturation unit (ZN) **characterized in that** watersource (UW) is connected with hydrogen saturation unit (ZN) using water pipes via noise-type micro-clustering device (MS), wherein noise-type micro-clustering device (MS) has reservoir (ZM) that is connected with water source (UW) via linear water flow valve (ZL), the upper part of reservoir (ZM) is connected with noise-type reactor (RS) that is connected with the lower part of reservoir (ZM) via water pump (PM), wherein noise reactor (RS) contains at least two glass noise diodes (D1, D2), reservoir (ZM) is also provided with water level sensor (CP1) and ventilation exhaust (VT1) and reservoir (ZM) is connected with at least one hydrogen saturation container (KN) via at least one metering pump (PD1), wherein hydrogen saturation container (KN) is provided with diffuser (DF₁), connected with hydrogen source (H₂) via three-way hydrogen valve (ZT), pressure controller (RD) and main gas valve (ZG), wherein each hydrogen saturation container (KN) is connected with ventilation exhaust (VT₃, VT₄, VTₙ₊₂) via check valve (BP₁, BP₂, BPₙ₊₁).

2. The system according to claim 1, **characterised in that** container (KN) is provided with water level sensor (CP2) and a spigot provided with hydrated water outlet valve (ZW).

3. The system according to claim 1, **characterised in that** hydrogen saturation container (KN) has the form of bottle (BT1, BTₙ).

4. The system according to claim 1, **characterised in that** glass noise diodes (D1, D2) are provided with cavity anodes (A) and flat cold cathodes (K) powered using DC pulsating voltage (U₊,U₋), wherein the vacuum in glass diodes (D1, D2) is dynamically maintained using air infiltration vacuum pump (PP), connected via vacuum control valve (ZR) and air filter (FI) with humid ambient air inlet (WP), while the outlet of vacuum pump (PP) is connected with ventilation exhaust (VT).

5. The system according to claim 1, **characterised in that** water source (UW) is equipped with submersible pump (PG) that is connected to water treatment plant (SU) and mineral composition regulator (KS) with linear water flow valve (ZL) of noise-type micro-clustering device (MS).
